# NEUE EUROPÄISCHE PATENTSCHRIFT

(11) **EP 3 492 215 B2**
(45) Veröffentlichungstag und Bekanntmachung des Hinweises auf die Entscheidung über den Einspruch: **21.01.2026**
(45) Hinweis auf die Patenterteilung: 23.09.2020
(21) Anmeldenummer: 18215619.0
(22) Anmeldetag: 29.01.2014
(51) Int. Cl.: B23K 31/12, B22F 3/105, B29C 67/00, B23K 26/34, B22F 10/28, B22F 12/90, B33Y 40/00, B33Y 50/00

(54) **VERFAHREN ZUR BEURTEILUNG DER STRUKTURQUALITÄT VON DREIDIMENSIONALEN BAUTEILEN**
METHOD FOR ASSESSING THE STRUCTURAL QUALITY OF THREE-DIMENSIONAL COMPONENTS
PROCÉDÉ D'ÉVALUATION DE LA QUALITÉ DE LA STRUCTURE DE COMPOSANTS TRIDIMENSIONNELS

(30) Priorität: 08.03.2013 DE 102013003937
(43) Veröffentlichungstag der Anmeldung: 05.06.2019
(62) Teilanmeldung aus: 14710792.4
(73) Patentinhaber: Concept Laser GmbH, 96215 Lichtenfels (DE)
(72) Erfinder: Herzog, Frank, 96215 Lichtenfels (DE)
(74) Vertreter: Hafner & Kohl PartmbB

(56) Entgegenhaltungen:
- WO-A1-2007/147221
- WO-A2-2011/026078
- DE-U1- 202010 010 771
- US-A1- 2003 205 849
- US-A1- 2004 200 816
- US-A1- 2009 152 771
- US-A1- 2012 203 365
- Retrieved from the Internet <URL:https://www.johnhart.com.au/additive-manufacturinq/software-for-additive-manufacturinq/eostate- monitoring-suite-real-time-monitoring-for-industrial-3d-printing>

## Beschreibung

Die Erfindung betrifft ein Verfahren zur Beurteilung der Strukturqualität von dreidimensionalen Bauteilen, die durch ein Lasersinter- oder ein Laserschmelzverfahren hergestellt werden. Bei Lasersinter- oder Laserschmelzverfahren werden Bauteile durch aufeinanderfolgendes Verfestigen einzelner Schichten eines Baumaterials durch Sintern oder Aufschmelzen verfestigt. Der durch einen punkt- oder linienförmigen Energieeintrag erzeugte Schmelzbereich wird durch eine Sensorvorrichtung erfasst, daraus werden Sensorwerte zur Evaluierung einer Bauteilqualität hergeleitet und die Sensorwerte zusammen mit den die Sensorwerte im Bauteil lokalisierenden Koordinaten werden abgespeichert.

Ein derartiges Verfahren geht aus DE 20 2010 010 771.7 hervor. Beim Stand der Technik ist es bereits möglich, anhand der Sensorwerte zu entscheiden, ob sich beim Bauvorgang im Bauteil strukturkritische, d. h. sich auf die Qualität, insbesondere die Festigkeit des Bauteils auswirkende Störstellen gebildet haben, bei denen z. B. das Baumaterial nicht in der vorhergesehenen Weise verfestigt ist oder sich aufgrund des Bauvorganges sonstige Störstellen gebildet haben.

Der Erfindung liegt die Aufgabe zugrunde, ein Verfahren mit den Merkmalen des Patentanspruches 1 derart auszubilden, dass nach Fertigstellung des hergestellten Bauteils mit reduziertem Aufwand an diesem weitergehende Untersuchungen wie z. B. Bruchtests, Bauteilschnitte durchgeführt werden können. Diese Aufgabe wird durch die kennzeichnenden Merkmale des Anspruches 1 gelöst. Vorteilhafte Weiterbildungen ergeben sich aus den Unteransprüchen.

Als Kern des Verfahrens wird es angesehen, zunächst einmal die ermittelten Sensorwerte grundsätzlich zu unterteilen in Sensorwerte, die für die Strukturqualität des Bauteils kritisch erscheinen und solche, die als unkritisch eingestuft werden. Die kritischen Sensorwerte können dann abstandsbezogen auf einen im Bereich der Oberfläche des Bauteils liegenden oder angeordneten Bezugspunkt dargestellt werden. Mit anderen Worten ist es möglich, kritische Sensorwerte z. B. abstandsbezogen zu einer Bodenfläche des Bauteils darzustellen oder zu einer ausgewählten Seitenfläche. Die Bedienungsperson weiß dann ganz genau, in welcher Tiefe bezogen auf die ausgewählte Seitenfläche ein Fehler zu vermuten ist und hat dann die Möglichkeit, an der entsprechenden Stelle des Bauteils z. B. Bruchtests durchzuführen oder mittels einer Diamantsäge das Bauteil aufzuschneiden und im Wege eines "Reverse Engineering" nachzuforschen, welche Auswirkungen Störungen beim Bauvorgang auf das Bauteil, insbesondere auf dessen Strukturqualität und damit auf die Festigkeit des Bauteils haben. Die genaue abstandsbezogene Lokalisierung zu einem Außenbereich des Bauteils ermöglicht es, das Bauteil z.B. einzuspannen und dann genau an der entsprechenden Stelle aufzusägen, aufzubohren oder sonstige Tests durchzuführen, um den als kritisch eingestuften Innenbereich des Bauteils zu erforschen.

Als Bezugspunkt, der zur abstandsbezogenen Darstellung der für die Strukturqualität des Bauteils kritischenweise dienen kann, bieten sich definierte Punkte auf einer Außenfläche des fertigen Bauteils, eine Kante des Bauteils oder z. B. eine Spannausnehmung oder ein Spannvorsprung an dem fertiggestellten Bauteil an. Spannausnehmungen oder Spannvorsprünge dienen an Bauteilen dazu, diese nach dem Bauvorgang mit Hilfe eines Spannsystems in eine Bearbeitungsmaschine einzusetzen und über das Spannsystem exakt zu positionieren. Ist der genaue Abstand bzw. die genaue Innenlage von Störstellen im Bauteil bezogen auf den Spannpunkt bekannt, dann kann z.B. über einen Bearbeitungsautomaten eine genaue Untersuchung des fertiggestellten Bauteils erfolgen, z.B. durch eine zerspanende Technik oder auch durch zerstörungsfreie Untersuchungsmethoden.

Wird eine Vermaßung zwischen dem gewählten Bezugspunkt, z. B. dem Spannpunkt und einem als strukturkritisch beurteilten angezeigten Sensorwert, der eine Störstelle im Bauteil darstellen kann, vorgenommen, dann lassen sich Untersuchungsgeräte wie beispielsweise eine Schneidevorrichtung, eine Bohrvorrichtung, eine Bruchvorrichtung, mit der das Bauteil an einer ganz bestimmten Stelle auf Bruch getestet werden soll und dgl. besonders exakt an das zu untersuchende Bauteil heranführen.

Zur Beschleunigung des Verfahrens und zur Vereinfachung einer Darstellung ist es vorteilhaft, wenn das Bauteil vorab in belastungskritische und belastungsunkritische Bereiche aufgeteilt wird und eine Anzeige von als strukturkritisch eingestuften Sensorwerten nur in belastungskritischen Bauteilbereichen vorgenommen wird. Damit lässt sich die nach Art eines "Computertomogramms" auszuführende 3D-Darstellung vereinfachen und deutlich übersichtlicher machen. Belastungsunkritische Bereiche des Bauteils werden nicht mit Sensorwertdarstellungen versehen und bleiben damit transparent, sodass die belastungskritischen Bauteile besser inspiziert werden können. Unter Umständen ist es aber vorteilhaft, besonders strukturkritische Sensorwerte, d. h. Sensorwerte die auch belastungsunkritische Bauteile als Ausschuss ausweisen könnten, mit angezeigten Sensorwerten zu versehen.

Bei der Konstruktion eines Bauteils ist es möglich, von vorne herein in belastungskritischen Bauteilen aufgrund konstruktiver Vorgegebenheiten mögliche Bruchlinien zu definieren. Treten in der Nähe solcher vorab bestimmter Bruchlinien als strukturkritisch beurteilte Sensorwerte auf, dann ist Vorsicht geboten. Deswegen ist es erfindungsgemäß, Bruchlinien zu definieren, und sogar in der Darstellung anzuzeigen und als strukturkritisch beurteilte Sensorwerte bezogen auf mögliche Bruchlinien darzustellen. Dabei kann auch der Abstand zwischen den strukturkritischen Sensorwerten und möglichen Bruchlinien vermaßt dargestellt werden, um dem Betrachter genaue Auskunft zu geben, wie weit als strukturkritisch beurteilte Sensorwerte von möglichen Bruchlinien entfernt sind. Es ist auch möglich, eine Mehrzahl von nahe beieinanderliegenden als strukturkritisch einzustufenden Sensorwerten als Sensorwertecluster anzuzeigen. Reicht z. B. ein Sensorwertecluster mit strukturkritischen Herstellungswerten in die Nähe einer Bruchlinie oder gar über diese hinweg, so ist davon auszugehen, dass das Bauteil bei Belastung im Bereich der Bruchlinie zu Bruch geht. Dann kann eine bestehende hohe Bruchgefahr auf einem Display angezeigt werden, ohne dass das Bauteil einem Bruchtest unterzogen wird.

Die Bruchgefahr kann im Bruchgefahrstufen angezeigt werden, wobei eine Einordnung in Bruchgefahrstufen abhängig von der Anzahl kritischer Sensorwerte, der Schwere der aufgrund der Sensorwerte zu erwartenden Strukturstörungen bezogen auf einzelne Sensorwerte oder Sensorwertcluster und deren Abstand zu einer möglichen Bruchlinie erfolgt.

Die Ansprüche 11 - 13 beschreiben Maßnahmen, die zu einer zerstörenden Untersuchung des Bauteils führen und Aufschluss geben, welcher Art die Strukturstörungen sind, die von den Sensorwerten angezeigt werden können und welche Festigkeitsfolgen diese Strukturstörungen auf das Bauteil haben.

Die Erfindung ist anhand vorteilhafter Ausführungsbeispiele näher erläutert. Diese zeigen:
- Fig. 1: eine schematische zweidimensionale Darstellung eines z.B. knochenförmigen, d.h. mittig eingeschnürten Bauteils mit verfahrensgemäß dargestellten kritischen Sensorwerten;
- Fig. 2: eine schematische 3D-Darstellung eines stangenartigen Bauteils mit angezeigten Sensorwerten.

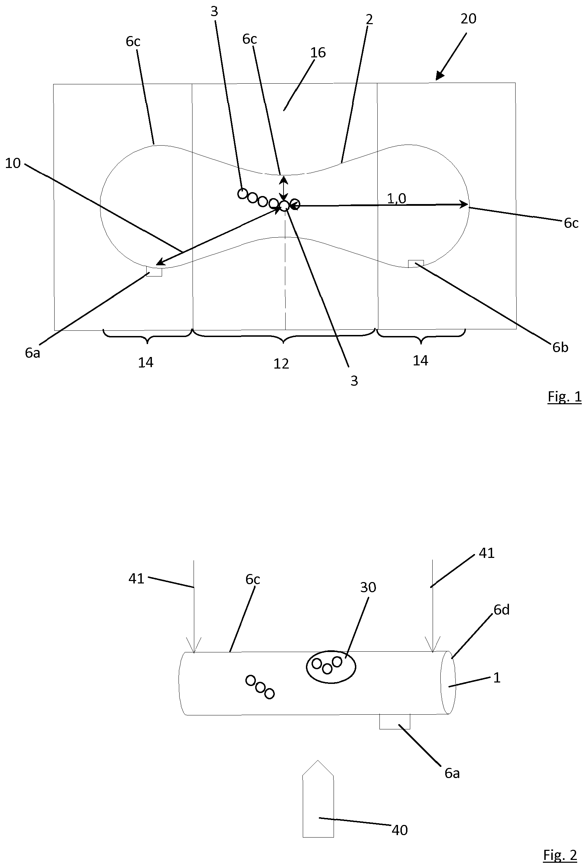

Bei dem Verfahren werden durch ein Lasersinter- oder Laserschmelzverfahren Bauteile hergestellt. In Fig. 1 ist ein knochenartiges Bauteil 1 mit einer Einschnürung 2 im Mittelbereich des Bauteils 1 zweidimensional, d.h. als Bauteilschicht dargestellt. Verfestigung des Bauteils erfolgt durch Verfestigung einzelner Schichten durch die Einwirkung einer Strahlung durch Sintern oder Aufschmelzen eines pulverartigen Baumaterials. Der Schmelzbereich, der durch den Energieeintrag entsteht, wird durch eine Sensorvorrichtung erfasst und daraus werden Sensorwerte zur Evaluierung einer Bauteilqualität hergeleitet. Die Sensorwerte können zwei- oder mehrdimensional bezogen auf ihren Erfassungsort im Bauteil 1 dargestellt werden, z.B. durch fleckartige Abbildungen von Bauteilstörstellen 3.

Die Sensorwerte werden zusammen mit den die Sensorwerte im Bauteil 1 lokalisierenden Koordinatenwerten abgespeichert.

Gemäß der Erfindung werden zunächst die ermittelten Sensorwerte in für die Strukturqualität des Bauteils 1 kritische und unkritische Werte unterteilt. Dies bedeutet, dass z.B. abhängig von der Größe einer Störung, von einer Temperaturabweichung beim Bauvorgang, von Pulverfehlstellen im Schichtauftrag und dergleichen die Sensorwerte in kritisch und unkritisch unterteilt werden und wenigstens die für die Strukturqualität des Bauteils 1 kritischen Werte abstandsbezogen auf einen im Bereich der Oberfläche 5 des Bauteils liegenden oder angeordneten Bezugspunkt dargestellt werden. Als Bezugspunkt 6 kann beispielsweise ein Spannvorsprung 6a, eine Spannausnehmung 6b oder ein beliebiger Punkt 6c auf der Oberfläche 5 des Bauteils herangezogen werden. Bedeutungsvoll ist in diesem Zusammenhang, dass nach Fertigstellung des Bauteils 1 ausgehend von der Oberfläche 5 des Bauteils festgestellt werden kann, wo und insbesondere in welcher Tiefe im Bauteil die kritischen Werte 3 angeordnet sind.

In vorteilhafter Weise erfolgt eine Visualisierung der kritischen Sensorwerte mittels einer Visualisierungseinrichtung, wobei eine Vermaßung 10 durch Maßpfeile hilfreich ist, um ausgehend von einem gewählten Bezugspunkt 6 den kritischen Wert im Bauteilinneren aufzuspüren.

Ausgehend von konstruktiven Gegebenheiten kann ein Bauteil 1 in belastungskritische Bereiche 12 und belastungsunkritische Bereiche 14 aufgeteilt werden und eine Anzeige von als strukturkritisch eingestuften Sensorwerten 3 nur in den belastungskritischen Bauteilbereichen 12 erfolgen. Allerdings sollten vorteilhafterweise besonders strukturkritisch beurteilte Sensorwerte, d.h. Fehlstellen, die hinsichtlich der Bauteilqualität als besonders kritisch einzustufen sind, in allen Bauteilbereichen 12, 14 angezeigt werden.

Erfindungsgemäß ist es vorgesehen, in belastungskritischen Bauteilbereichen 12 aufgrund konstruktiver Vorgegebenheiten mögliche Bruchlinien 16 zu definieren und die als strukturkritisch beurteilten Sensorwerte bezogen auf eine mögliche Bruchlinie 16 darzustellen. Liegen ein oder mehrere kritische Sensorwerte 3 nahe bei oder sogar auf einer Bruchlinie 16, dann ist eine relativ hohe Bruchwahrscheinlichkeit des Bauteils 1 vorhanden, die auf einer Anzeigevorrichtung einer Visualisierungseinrichtung 20 z.B. in Form eines Bildschirms angezeigt werden kann. Darüber hinaus ist es vorteilhaft, eine Mehrzahl von strukturkritischen Sensorwerten, die nahe beieinander liegen als Sensorwertecluster 30 anzuzeigen, weil nahe beieinander liegende kritische Sensorwerte aufgrund einer Strukturwechselwirkung natürlich besonders kritisch für die Bauteilqualität sind.

Auf der Visualisierungseinrichtung 20 kann die Bruchgefahr in Bruchgefahrstufen angezeigt werden, wobei eine Einordnung in Bruchgefahrstufen abhängig von der Anzahl kritischer Sensorwerte, der Schwere der aufgrund der Sensorwerte zu erwartenden Strukturstörungen bezogen auf einzelne Sensorwerte oder Sensorwertcluster oder deren Abstand zu einer möglichen Bruchlinie 16 erfolgt.

In Zeichnungsfigur 2 ist noch dargestellt, wie ein fertig gestelltes Bauteil 1 in Stangenform mit einer Mehrzahl von kritischen Sensorwerten 3 oder Sensorwertclustern 30 in einem Bruchbelastungstest unterzogen wird. Dazu wird mit Hilfe des gewählten Bezugspunktes 6a, 6c oder 6d das Bauteil 1 zu einer Bruchschneide 40 positioniert und durch Ausübung einer Gegenkraft 41 auf die Bruchschneide 40 gedrückt. Derartige Bruchtests dienen dazu, um in Praxis die Auswirkungen von Strukturstörungen in Form von kritischen Sensorwerten 3 oder Sensorwertclustern 30 auf die Bruchqualität des Bauteils 1 zu untersuchen.

Grundsätzlich ist es möglich, mit Hilfe des Verfahrens auch unmittelbaren Einfluss auf den Herstellungsprozess zu nehmen und/oder zumindest eine Bedienungsperson während des laufenden Herstellungsprozesses über auftretende kritische Werte, die für die Strukturqualität des Bauteils relevant sind, zu informieren. Wird beispielsweise durch die Vorrichtung festgestellt, dass in einem Bauteilbereich, der als belastungskritisch angesehen wird, eine Mehrzahl von Störstellen auftritt, die durch kritische Sensorwerte angezeigt werden, dann kann eine optische oder akustische Warneinrichtung initiiert werden, um der Bedienungsperson eine entsprechende Mitteilung zu machen. Gegebenenfalls ist es aber auch möglich, die Belichtungseinrichtung der Vorrichtung zu veranlassen, kritische "unterbelichtete" Stellen des Bauteils noch einmal nachzubelichten bzw. nachzubestrahlen und dadurch den erforderlichen Schmelzprozess zu vervollständigen, falls eine ungenügende Bestrahlung des Bauteils in dem jeweiligen Bereich erkannt wurde. Gleiches gilt für einen Nachbeschichtungsprozess dann, wenn festgestellt wird, dass der Pulverauftrag an einer entsprechenden Stelle nicht komplett war. In diesem Falle ist es möglich, Bauteilbereiche mit zu wenig Baumaterial noch einmal nachzubeschichten und dann gezielt dort aufzuschmelzen, um Fehlstellen zu heilen.

### BEZUGSZEICHENLISTE

- 1: Bauteil
- 2: Einschnürung
- 3: Sensorwert

- 5: Oberfläche von 1
- 6a: Spannvorsprung
- 6b: Spannausnehmung
- 6c: beliebiger Punkt

- 10: Vermassung

- 12: belastungskritischer Bereich

- 14: belastungsunkritischer Bereich

- 16: Bruchlinie

- 20: Visualisierungseinrichtung
- 30: Sensorwertecluster

- 40: Bruchschneide
- 41: Gegenkraft

## Patentansprüche

1. Verfahren zur Beurteilung der Strukturqualität von dreidimensionalen Bauteilen (1), die durch ein Lasersinter- oder Laserschmelzverfahren hergestellt werden, bei welchem das Bauteil (1) durch aufeinanderfolgendes Verfestigen einzelner Schichten aus durch Einwirkung einer Strahlung verfestigbaren Baumaterials durch Sintern oder Aufschmelzen des Baumaterials erfolgt, wobei der durch einen punkt- oder linienförmigen Energieeintrag erzeugte Schmelzbereich durch eine Sensorvorrichtung erfasst wird und daraus Sensorwerte (3) zur Evaluierung einer Bauteilqualität hergeleitet werden und die Sensorwerte (3) zusammen mit den die Sensorwerte (3) im Bauteil (1) lokalisierenden Koordinatenwerten abgespeichert werden, **gekennzeichnet durch**
- Einteilung der ermittelten Sensorwerte (3) in für die Strukturqualität des Bauteils (1) kritische Werte und unkritische Werte,
- Darstellung wenigstens der für die Strukturqualität des Bauteils (1) kritischen Werte abstandsbezogen auf einen im Bereich der Oberfläche (5) des Bauteils (1) liegenden oder angeordneten Bezugspunkt (6), wobei
- eine Vermaßung zwischen einem gewählten Bezugspunkt und einem als strukturkritisch beurteilten angezeigten Sensorwert durchgeführt wird,
wobei in belastungskritischen Bauteilbereichen (12) aufgrund konstruktiver Vorgegebenheiten mögliche Bruchlinien (16) definiert und die als strukturkritisch beurteilten Sensorwerte (3) bezogen auf eine mögliche Bruchlinie (16) darstellbar sind.

2. Verfahren nach Anspruch 1, **dadurch gekennzeichnet, dass** als Bezugspunkt (6) ein definierter Punkt (6c) auf einer Außenfläche (5) des fertiggestellten Bauteils (1), eine Kante (6d) des fertiggestellten Bauteils (1) oder eine Spannausnehmung (6b) oder ein Spannvorsprung (6a) an dem fertiggestellten Bauteil (1) definiert wird.

3. Verfahren nach Anspruch 1 oder 2, **dadurch gekennzeichnet, dass** die zur Evaluierung der Strukturqualität erfassten Sensorwerte (3) mittels einer Visualisierungseinrichtung (20) in zwei- oder mehrdimensionaler Darstellung bezogen auf ihren Erfassungsort im Bauteil (1) und bezogen auf den gewählten Bezugspunkt (6) auf dem Bauteil (1) dargestellt werden.

4. Verfahren nach einem der vorhergehenden Ansprüche, **gekennzeichnet durch** Anzeige einer Vermaßung (10) zwischen dem gewählten Bezugspunkt (6) und einem als strukturkritisch beurteilten angezeigten Sensorwert (3).

5. Verfahren nach einem der vorhergehenden Ansprüche, **dadurch gekennzeichnet, dass** das Bauteil (1) in belastungskritische (12) und belastungsunkritische Bereiche (14) aufgeteilt wird und eine Anzeige von als strukturkritisch eingestuften Sensorwerten (3) nur in belastungskritischen Bauteilbereichen (12) durchgeführt wird.

6. Verfahren nach einem der vorhergehenden Ansprüche, **dadurch gekennzeichnet, dass** als besonders strukturkritisch beurteilte Sensorwerte (3) in allen Bauteilbereichen (12, 14) angezeigt werden.

7. Verfahren nach einem der vorhergehenden Ansprüche, **dadurch gekennzeichnet, dass** dass eine Mehrzahl von beieinanderliegenden, als strukturkritisch einzustufenden Sensorwerten (3) als Sensorwertecluster (30) anzeigbar sind.

8. Verfahren nach einem der vorhergehenden Ansprüche, **dadurch gekennzeichnet, dass** die Sensorwertecluster (30) bezogen auf mögliche Bruchlinien (16) dargestellt werden und bei einem festzulegenden Häufungsgrad kritischer Sensorwerte (3) in der Nähe möglicher Bruchlinien (16) eine hohe Bruchgefahr angezeigt wird.

9. Verfahren nach einem der vorhergehenden Ansprüche, **dadurch gekennzeichnet, dass** die Bruchgefahr in Bruchgefahrstufen angezeigt wird, wobei eine Einordnung in Bruchgefahrenstufen abhängig von der Anzahl kritischer Sensorwerte (3), der Schwere der aufgrund der Sensorwerte (3) zu erwartenden Strukturstörungen bezogen auf einzelne Sensorwerte (3) oder Sensorwertcluster (30) und/oder deren Abstand zu einer möglichen Bruchlinie (16) erfolgt.

10. Verfahren nach einem der vorhergehenden Ansprüche, **dadurch gekennzeichnet, dass** der Abstand kritischer Sensorwerte (3) oder kritischer Sensorwertecluster (30) mit vermaßten Abstandslinien (10) bezogen auf mögliche Bruchlinien (16) dargestellt werden.

11. Verfahren nach einem der vorhergehenden Ansprüche, **dadurch gekennzeichnet, dass** das fertiggestellte Bauteil (1) in eine mittels seiner Spannausnehmung (6b) oder seinem Spannvorsprung (6a) oder bezogen auf eine Kante (6d) oder Fläche (6c) des Bauteils (1) in definierter Lage in eine Spannvorrichtung eingesetzt wird und ein Innenbereich des Bauteils (1) mit als strukturkritisch beurteilten festgestellten Sensorwerten (3) freigelegt wird.

12. Verfahren nach Anspruch 11, **dadurch gekennzeichnet, dass** das Freilegen des zu untersuchenden Innenbereiches des Bauteils (1) durch ein Aufschneiden des Bauteils (1), Aufbohren des Bauteils (1) oder Brechen des Bauteils (1) erfolgt.

13. Verfahren nach Anspruch 12, **dadurch gekennzeichnet, dass** das Brechen des Bauteils (1) in einer Bruchvorrichtung erfolgt, wobei eine Bruchschneide (40) der Bruchvorrichtung an einem Außenbereich des definiert eingespannten Bauteils (1) angelegt wird, unter welchem kritische Sensorwerte (3) angeordnet sind und zum Bruch des Bauteils (1) führende Kräfte auf das Bauteil (1) ausgeübt werden und eine Bruchlast bestimmt wird.

## Claims

1. Method for assessing the structural quality of three-dimensional components (1), which are produced by a laser sintering or laser melting method, in which the component (1) is carried out by successive solidification of individual layers of solidifiable by the action of radiation building material by sintering or melting of the building material, wherein the melting range generated by a point or line-shaped energy input is detected by a sensor device and sensor values (3) are derived from it for the evaluation of a component quality and the sensor values (3) are stored together with the sensor values (3) in the component (1) localizing coordinate values, **characterized by**
- classification of the determined sensor values (3) into critical values and non-critical values for the structural quality of the component (1),
- representation of at least the critical values for the structural quality of the component (1) in relation to a distance in the region of the surface (5) of the component (1) lying or arranged reference point (6), wherein
- a measurement is carried out between a selected reference point and an indicated sensor value assessed as structurally critical, wherein in load-critical component areas (12) possible fracture lines (16) are defined due to design specifications and the sensor values (3) assessed as structurally critical can be represented with reference to a possible fracture line (16).

2. Method of claim 1, **characterized in that** as a reference point (6) a defined point (6c) on an outer surface (5) of the completed component (1), an edge (6d) of the completed component (1) or a clamping recess (6b) or a clamping projection (6a) is defined on the completed component (1).

3. Method of claim 1 or 2, **characterized in that** the sensor values detected for evaluating the structural quality (3) are represented by means of a visualization device (20) in two- or multidimensional representation with respect to their detection location in the component (1) and with respect to the selected reference point (6) on the component (1).

4. Method according to one of the preceding claims, **characterized by** displaying a dimension (10) between the selected reference point (6) and an indicated sensor value assessed as structurally critical (3).

5. Method according to one of the preceding claims, **characterized in that** the component (1) is divided into load-critical (12) and load-uncritical (14) regions and a display of sensor values (3) classified as structurally critical is performed only in load-critical component regions (12).

6. Method according to one of the preceding claims, **characterized in that** sensor values (3) assessed as particularly structurally critical are displayed in all component ranges (12, 14).

7. Method according to one of the preceding claims, **characterized in that** a plurality of adjacent, to be classified as structurally critical sensor values (3) as sensor value cluster (30) are presentable.

8. Method according to one of the preceding claims, **characterized in that** the sensor value clusters (30) are shown with reference to possible fracture lines (16) and a high risk of fracture is indicated at a to be determined degree of accumulation of critical sensor values (3) in the vicinity of possible fracture lines (16).

9. Method according to one of the preceding claims, **characterized in that** the risk of breakage is displayed in breakage risk stages, wherein an classification in breakage risk stages depending on the number of critical sensor values (3), the severity of the structural disturbances to be expected due to the sensor values (3) based on individual sensor values (3) or sensor value clusters (30) and / or their distance to a possible break line (16) takes place.

10. Method according to one of the preceding claims, **characterized in that** the distance of critical sensor values (3) or critical sensor value cluster (30) with measured distance lines (10) are shown with reference to possible fracture lines (16).

11. Method according to one of the preceding claims, **characterized in that** the finished component (1) is inserted into a clamping device by means of its clamping recess (6b) or its clamping projection (6a) or based on an edge (6d) or surface (6c) of the component (1) in a defined position and an interior area of the component (1) is exposed with determined sensor values (3) assessed as structurally critical.

12. Method of claim 11, **characterized in that** exposing the inner area of the component (1) to be examined by cutting the component (1), drilling the component (1) or breaking the component (1) takes place.

13. Method of claim 12, **characterized in that** the breaking of the component (1) takes place in a breaking device, wherein a breaking edge (40) of the breaking device is applied to an outside area of the defined clamped component (1), under which critical sensor values (3) are arranged and forces leading to the breaking of the component (1) are exerted on the component (1) and a breaking load is determined.

## Revendications

1. Procédé d'évaluation de la qualité structurelle des composants tridimensionnels (1) fabriqués par frittage ou fusion au laser, dans laquelle le composant (1) est obtenu par solidification successive de couches individuelles de matériaux de construction solidifiables par rayonnement par frittage ou fusion du matériau de construction, la zone de fusion générée par une entrée d'énergie ponctuelle ou linéaire étant détectée par un dispositif de capteur et les valeurs du capteur (3) étant déduites pour l'évaluation de la qualité d'un composant et les valeurs du capteur (3) étant enregistrées avec les valeurs de coordonnées localisant les valeurs du capteur (3) dans le composant (1), **caractérisées par**:
- subdivision des valeurs de capteur déterminées (3) en valeurs critiques et non critiques pour la qualité structurelle du composant (1),
- représentation d'au moins les valeurs critiques pour la qualité structurelle du composant (1) par rapport à une distance par rapport à un point de référence (6) situé ou disposé dans la zone de la surface (5) du composant (1), où:
- une mesure est effectuée entre un point de référence choisi et une valeur du capteur indiquée comme critique sur le plan structurel, dans laquelle, dans les zones critiques pour la charge des composants (12), des lignes de rupture possibles (16) sont définies sur la base de données constructives et les valeurs du capteur évaluées comme critiques sur le plan structurel (3) peuvent être représentées par rapport à une ligne de rupture possible (16).

2. Procédé selon la revendication 1, **caractérisé en ce que** le point de référence (6) est défini comme un point défini (6c) sur une surface extérieure (5) de l'élément fini (1), un bord (6d) de l'élément fini (1) ou une douille de serrage (6b) ou une saillie de serrage (6a) sur l'élément fini (1).

3. Procédé selon la revendication 1 ou 2, **caractérisé en ce que** les valeurs du capteur (3) saisies pour l'évaluation de la qualité de la structure sont représentées au moyen d'un dispositif de visualisation (20) en représentation bidimensionnelle ou multidimensionnelle par rapport à leur emplacement de détection dans le composant (1) et par rapport au point de référence choisi (6) sur le composant (1).

4. Procédé selon l'une quelconque des revendications précédentes, **caractérisé par** l'affichage d'une dimension (10) entre le point de référence choisi (6) et une valeur indiquée du capteur jugée structurellement critique (3).

5. Procédé selon l'une quelconque des revendications précédentes, **caractérisé en ce que** le composant (1) est divisé en zones critiques pour la charge (12) et non critiques pour la charge (14) et qu'un affichage de valeurs de capteurs classées comme critiques pour la structure (3) n'est effectué que dans des zones critiques pour la charge (12).

6. Procédé selon l'une quelconque des revendications précédentes, **caractérisé en ce que** des valeurs de capteur (3) jugées particulièrement critiques sur le plan structurel sont affichées dans toutes les gammes de composants (12, 14).

7. Procédé selon l'une quelconque des revendications précédentes, **caractérisé en ce qu'**une pluralité de valeurs de capteurs (3) contiguës, à classer comme critiques sur le plan structurel, peuvent être indiquées en tant que groupes de valeurs de capteurs (30).

8. Procédé selon l'une quelconque des revendications précédentes, **caractérisé en ce que** les groupes de valeurs de capteurs (30) sont représentés par rapport à d'éventuelles lignes de rupture (16) et qu'un risque élevé de rupture est indiqué à proximité d'éventuelles lignes de rupture (16) à un degré d'accumulation à déterminer de valeurs critiques de capteurs (3).

9. Procédé selon l'une quelconque des revendications précédentes, **caractérisé en ce que** le risque de rupture est indiqué en degrés de risque de rupture, une classification en degrés de risque de rupture étant effectuée en fonction du nombre de valeurs critiques du capteur (3), de la gravité des perturbations structurelles attendues en raison des valeurs du capteur (3) par rapport à des valeurs individuelles du capteur (3) ou à des groupes de valeurs du capteur (30) et/ou de leur distance par rapport à une ligne de rupture possible (16).

10. Procédé selon l'une quelconque des revendications précédentes, **caractérisé en ce que** la distance des valeurs critiques du capteur (3) ou des groupes critiques de valeurs du capteur (30) est représentée avec des lignes de distance mesurées (10) par rapport à d'éventuelles lignes de rupture (16).

11. Procédé selon l'une quelconque des revendications précédentes, **caractérisé en ce que** l'élément fini (1) est inséré dans un dispositif de serrage dans une position définie au moyen de son orifice de serrage (6b) ou de son saillie de serrage (6a) ou par rapport à un bord (6d) ou à une surface (6c) de l'élément (1) et qu'une partie interne de l'élément (1) est exposée avec des valeurs de capteur déterminées (3) jugées critiques pour la structure.

12. Procédé selon la revendication 11, **caractérisé en ce que** la mise à nu de la partie interne de l'élément (1) à examiner s'effectue par la découpe de l'élément (1), le perçage de l'élément (1) ou la rupture de l'élément (1).

13. Procédé selon la revendication 12, **caractérisé en ce que** la rupture du composant (1) s'effectue dans un dispositif de rupture, dans lequel un tranchant de rupture (40) du dispositif de rupture est appliqué à une surface extérieure du composant (1) serré défini, sous laquelle des valeurs critiques de capteur (3) sont placées et des forces conduisant à la rupture du composant (1) sont exercées sur le composant (1) et une charge de rupture est déterminée.
